# EUROPEAN PATENT APPLICATION

(11) **EP 2 200 251 A1**
(43) Date of publication of application: **23.06.2010**
(21) Application number: 08254084.0
(22) Date of filing: 19.12.2008
(51) Int. Cl.: H04L 29/06

(54) **System for web-site verification**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

A method of enabling a user to verify a plurality of web-sites using a single one-time information generating algorithm is described. The software comprising the one-time password generating algorithm is provided in a secure form such as part of a sealed authentication device. When the user wishes to authenticate a web-site, they activate the authentication device to trigger the generation of one-time information. The server hosting the web-site is issued with a challenge by authentication application running on the user's terminal and responds with one-time information generated using software issued by an authenticating body which is sent to the client terminal. If the one-time information returned by the server matches the one-time information generated at the client terminal end, the web-site is authenticated and is displayed in a browser application running on the client terminal 32.

## Description

The present invention relates to device which enables a user to authenticate a plurality of web-sites by generating one-time password token information and to related aspects.

The authentication of web-sites is known using a digital certificate type of authentication scheme. A digital certificate verifies that the web-site is what it claims to be and is obtained by the site applying for a digital certificate from a certificate authority. The certificate authority issues an encrypted digital certificate that contains the applicant's public key and a variety of other identification information. The certificate authority makes its own public key available. The recipient of an encrypted message uses the certificate authority's public key to decode the digital certificate attached to the messages, verifies it is as issued by the certificate authority and then obtains the sender's public key and identification information held within the certificate. With this information the recipient can send an encrypted reply. However, frequently, the certificates are out of date and the recipient has to decide whether to proceed with an out-of-date certificate or to abandon the attempt to view that particular web-page.

The use of a device which generates a one-time password is known in the art to enable a user to be authenticated by a secure web-site. In such known authentication schemes, the user is first sent a device which is associated with a secure web-site. When the user seeks to access the website, they are prompted to provide user credentials such as a user identifier for example, and also to activate the device which then generates coded information using an algorithm. The coded information is then presented by the device to the user who inputs the coded information on their client terminal. The web-browser application on the client terminal is then arranged to transmit this information to the web-site which checks the coded information is compliant with a security condition(s) imposed by that web-site, for example, it may require the coded information to match equivalent information or to complement information accessible by the authentication server used by the web-site.

The above authentication schemes are limited however as they either require the user to verify the certificate authority for a web-site prior to confirming the identity of a web-site and/or in order for the user to be authenticated at a plurality of web-sites, the user needs to have a plurality of such devices, which are generally known in the art as "One-Time-Password" devices, one per secure web-site accessed. Thus the use of digital certificates is limited as a user must always trust the certificate authority which is verifying the web-site and the user must also always contact the certificate authority to obtain a copy of the certificate authority's public key before they obtain the sender's public key and the information within the certificate.

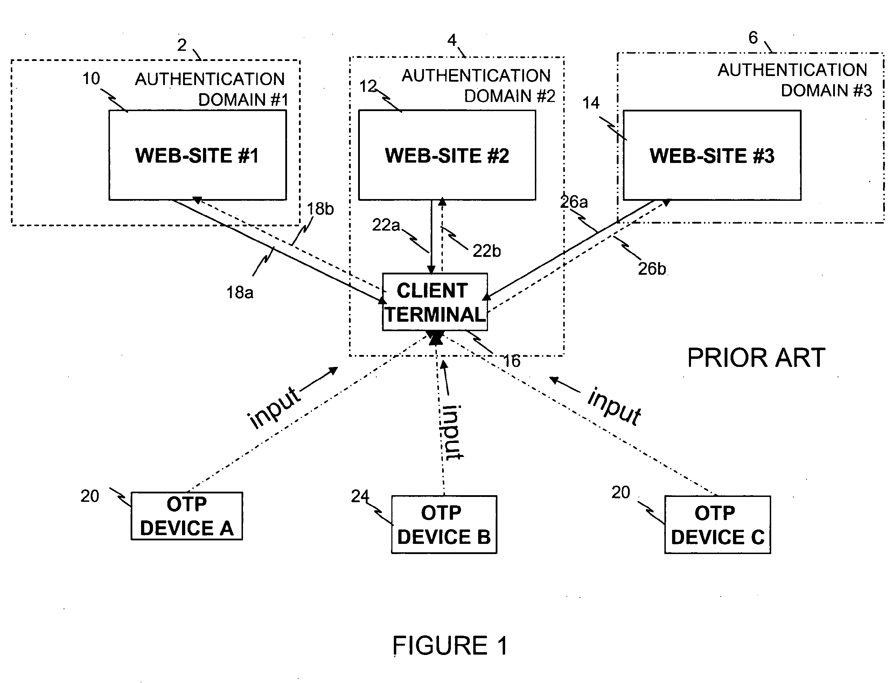

Figure 1 of the accompanying drawing shows such an exemplary scenario known in the art where a user needs to be authenticated by a plurality of web-sites using a challenge-response type of authentication scheme.

In Figure 1, three different secure web-sites 10, 12, 14 are shown which require a user to provide authentication information as part of a user identity validation process. A secure web-site uses SSL and authentication protocols to enable exchanges of information such as transactions to be confidential between the user and the web-site. Examples of secure web-sites include on-line bank accounts. Each web-site 10,12,14 is part of a different authentication domain 2, 4 6, beyond which the authentication protocols of that web-site no longer confer any confidentiality for information exchange with the user.

When the user seeks to access website 10 in authentication domain 2 using a client terminal 16, the web-site issues a challenge 18a which is communicated to the user via the client terminal 16. The user then activates a device 20 associated with the authentication domain 2 of the website 10 to generate coded information (also known in the art as a one-time password) which the user provides to the client terminal to generate response 18b to the web-site along with other information indicating the user's identity. If the response 18b to challenge 18a is valid and the user's identity information is valid, the user is authorised to access other areas of web-site 10 within the authenticated domain 2.

However, when the user seeks to access another web-site 12, a different authentication domain 4 is entered and the web-site 12 issues an separate authentication challenge 22a to which the user must provide an appropriate response 22b. If the web-site 12 also requires a user to employ a one-time password device 24 associated with the domain of web-site 12, then the user must have retain two password devices. As the number of authentication domains used by web-sites that the user wishes to access increases, the user must retain an increasing number of one-time passwords, so for example, if the user needed to access web-site 14, in a third authentication domain 6, then a third authentication challenge 26a is issued to which the user must generate a response 26b using information generated by a one-time password type device 28 associated with that web-site 14.

Each separate authentication domain associated with one or more secure web-sites which is known in the art to implement a one-time password style of authentication which requires a unique device to generate the coded information which will be provided in any response to the authentication challenge the website issues. This enables the subsequent communications between the user's terminal 16 and the server hosting the secure web-site 10,12,14 to be encrypted in an agreed manner and so remain confidential between the two parties.

However, depending on the number of authentication domains that the user wishes to access websites within, the user must participate in a number of different authentication schemes and may need to posses an equal number of different one-time password devices to generate the different coded information required to respond to the challenges issued by each site to authenticate the user at each of those web-sites.

The invention seeks to obviate and/or mitigate the problems known in the art where a user seeks to be authenticated at a plurality of secure web-sites, especially where it is desirable for the user to authenticate a web-site prior to disclosing any user identifying information to said web-site. The user identifying information can comprise login name and matching password information or any other items which normally are not transmitted unless the sender is sure as to the purpose of the disclosure.

The aspects and preferred embodiments of the invention are as set out by the independent claims and dependent claims appended to the description of the invention, and may be combined in any manner apparent to those of ordinary skill in the art as suitable to implement an embodiment of the invention.

The preferred embodiments of the invention will now be described with reference to the accompanying drawings which are by way of example only and in which:
Figure 1 shows a prior art scheme for authenticating a plurality of web-sites using a one-time password type device;
Figure 2 shows an embodiment of the invention in which a device is used to authenticate a plurality of web-sites;
Figure 3 shows steps in an authentication scheme according to an embodiment of the invention;
Figure 4 shows steps in an authentication scheme according to another embodiment of the invention; and
Figure 6 shows steps for generating one-time information according to the invention.

The detailed description set forth below in connection with the appended drawings is intended as a description of the presently preferred embodiments of the invention and is not intended to represent the only form in which the invention may be practiced. It is to be understood that the same or equivalent functions may be accomplished by different embodiments that are intended to be encompassed within the spirit and scope of the invention.

In the drawings, like numerals are used to indicate like elements throughout.

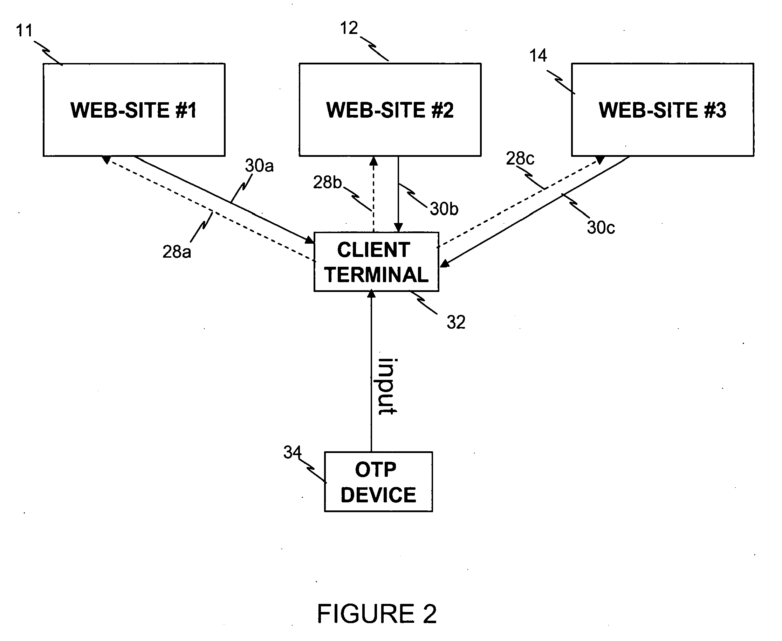

Figure 2 of the accompanying drawings shows an exemplary embodiment of an authentication system according to the invention in which a user seeks to be authenticated in a plurality of different authentication domains using a single authentication device 34 Examples of authentication devices include token type devices, smart cards and mobile phones, all of which are known in the art as capable of being issued as responding devices in two-way authentication challenges but which according to the invention are used instead, or additionally, to issue challenges.

The invention enables a user to authenticate the identity of a web-site regardless of whether subsequent communications are to be encrypted between the user's client terminal and the server (not shown in Figure 2). Accordingly, in Figure 2, of the plurality of web-sites which can be authenticated by the user, web-site 11 is non-secure whereas web-sites 12 and 14 are secure (and retain the numbering shown in Figure 1) and use a secure internet protocols for communication exchange with the user once the user is authenticated.

The invention is implemented by configuring an appropriate client terminal 32 running a internet-browser application or the like (referred to hereinafter as browser 31), for example, a communications-enabled computer comprising a web-browser or a communications device (which can comprise a laptop computer, mobile telephone, personal digital assistant or the like) comprising a web-browser. Examples of browsers 31 include Firefox, Mozilla, the Microsoft™ Internet Explorer, and Safari. However, the invention can also be implemented using other communications programs where a user may wish to confirm the identity of the server with which they are communicating, for example, proprietary remote log-in applications, and references to the term "browser 31" includes references to such programs where appropriate.

The client terminal 32 is configured using an client authentication application 33 (not shown in Figure 2). Once installed on the client terminal 32 , the client authentication application 33 interfaces with the browser 31 to extract and/or intercept information regarding the web-sites the browser 31 is configured by the user to access when the user enters the address of the relevant web-site(s). The client authentication application 33 then either prompts the user to trigger the authentication device 34, or causes the authentication device 34 to be triggered automatically in the case where a communications link exists between the client terminal 32 and the authentication device 34 (which could be via a wired connection or a short-range wireless communications protocol such as Bluetooth™).

The client authentication application 33 runs on client terminal 32 either as an additional software component of the browser 31 or as a separately executed program which interfaces appropriately with the browser 31.

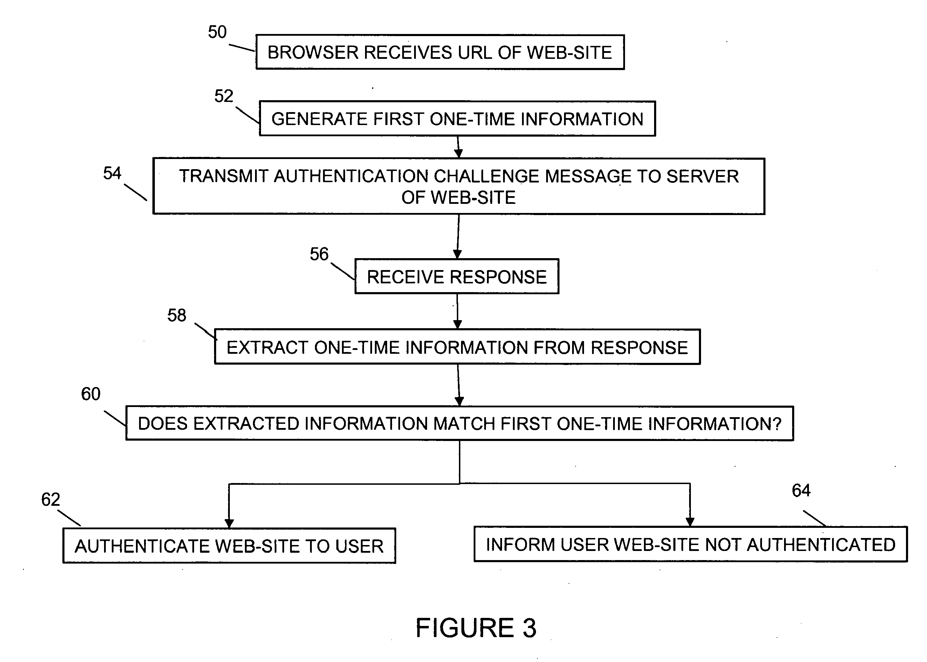

Figure 3 of the accompanying drawings shows the steps involved in a method of authenticating the identity of a plurality of remote servers 11,12, 14, one or more of which belong to different authentication domains, using a single authentication device 34.

According to the invention, when a user seeks to access one of the plurality of web-sites 11,12,14 for example, web-site 11, using the browser 31 by providing the browser application with the Universal Resource Locator (URL) of the web-site (step 50), the client authentication application 33 interrupts or otherwise intervenes the loading of the web-site on the browser 31. This enables the identity of the web-site to be authenticated using an authentication scheme according to an embodiment of the invention before any further information is requested from the user and/or the web-site page is loaded and displayed to the user. The client authentication application 33 in some embodiments interrupts the web-site from loading any further on the browser application. In other embodiments it causes the browser to display a message indicating that the site is being authenticated and/or that the user should activate the authentication device 34 according to the invention to generate one-time information.

The operation of the authentication device 34 to generate one-time information (a term of art described in more detail hereinbelow) is shown as step 52 in Figure 3. This is prior to the generation and transmission of an authentication challenge message to the server hosting the web-site which is to be authenticated (step 54) by the client authentication program 33 running on the client terminal 32. Those of ordinary skill in the art will be aware that the operation of the authentication device 34 to trigger the generation of one-time information and the issue of the challenge do not need to be time-synchronous. What is required is that they are synchronised within a predetermined duration of time to enable the response provided to the challenge to contain one-time information which, if dependent on time, is received within the same duration of time interval. This means that authentication device 34 can be activated just before or just after the challenge is issued as appropriate to any particular embodiment of the invention. The one-time information is generated using an appropriate algorithm which is executed on the authentication device 34.

Various schemes for generating one-time passwords are known in the art which use a mathematical algorithm in which new one-time information comprising, for example, a random sequence of numeric or alphabetical characters is generated using a function f for which the inverse function f⁻¹ is computationally nearly impossibly complex or too time-onerous to determine, for example, a cryptographic hash function.

One time information is generated by seeding such a function *f* with a seed value "v". For example, a seed value can be used to generate a sequence of one or more one-time information, each dependent on the previous one-time information e.g. f(v), *f*(*f(v)*), *f(f(f(v)))*,.... etc.

In some embodiments of the invention a time-synchronised one-time information authentication scheme is provided in which the next one-time information data set depends on a seed value "v" which associated with the current time. In such an embodiment, the authentication device 34 which generates the one-time information includes an accurate clock that has been synchronized with clocks on one or more authentication servers which provide responses to the challenges issued by the authentication device. Alternatively, or in addition, additional information such as transaction details and/or a counter and/or the web-identity can also be used to seed the function which generates the one-time information. A counter value is useful when incorporated into the seed as then even if the same challenge is issued, the response will contain different one-time information.

In a time-synchronized challenge type one-time password system according to an embodiment of the invention, a challenge is issued by the challenging entity, the authentication device 34 associated with the user, to the responding entity, the server for the web-site the user has entered the url of in the browser 31. When received by a responding entity that is provided with a valid server authentication algorithm which is seeded in the same way as the authentication device 34, the challenge message triggers the generation of one-time information. In a time-synchronised embodiment of the invention, the response that the responding entity provides contains one-time information whose generation is synchronized with the generation of one-time information by the authentication device 34 at the time of generating the challenge message. If the authentication device 34 generated one-time information matches the one-time information contained in the response, the authentication device 34 will authenticate the responding entity, here the web-site.

Once a challenge message has been sent to the server (step 52), the authentication application then waits for a response message from the server (step 54). When the client terminal 32 receives a response message (step 56), it processes the response to extract the one-time information (step 58) using any appropriate technique well-known to one of ordinary skill in the art. The response one-time information is then compared with the one-time information generated using the authentication device 34 (step 60).

If the response one-time information matches the first one-time information generated by the authentication device 34, then the web-server identity is authenticated (step 62). If not, then the web-server identity is not authenticated according to the invention (step 64). Any suitable means of alerting a user of the browser to the authentication status of the web-site which is known in the art may be employed.

A method of controlling access by a user to a web-site uses an authentication scheme according to an embodiment of the invention to control whether a user is allowed to access a web-site in one embodiment of the invention. In this embodiment of the invention, if a web-site is authenticated, the client authentication application 33 enables the web-site to be loaded onto the browser for display to the user and if the web-site is not authenticated, it stops the web-site from being loaded and displays an appropriate message to the user to alert them to the lack of authentication. In this embodiment, as the web-sites are not displayed by the browser to the user, the user can only access authenticated web-sites and is blocked by the client authentication application 33 from accessing non-authenticated web-sites.

In the embodiment of the invention shown in Figure 3, a challenge message is sent to the host server for a web-site. The host server for the web-site is with a copy of an appropriate server authentication application 58 which comprises the same mathematical algorithm for generating one-time information as that provided on the authentication device 34. The seed for the one-time information on both the server and the user device in one embodiment comprises a time-based value, which is generated by synchronised clocks on the server and the authentication device.

In order for a web-server to join the authentication scheme, the server simply applies to a distributor of the authentication software for a version of the server authentication software. A plurality of web-servers for different sites will all be provided with the same version of the one-time information algorithm. The same one-time information will be provided in response to any challenge issued to a web-site that has subscribed to the scheme and will match the information generated within the time-synchronisation interval by any of the user authentication devices 34.

In another embodiment of the invention, however, the seed value is additionally dependent on the url of the web-site the user has sought access to or another appropriate form of web-site identifier. In this embodiment, the web-site identifier is provided to the authentication device (either automatically via a suitable communications link with the client terminal 32 or alternatively, the user manually enters the web-site url (for example) into the authentication device), and the authentication device 34 then uses a seed value which depends on the web-site identifier to generate first one-time information.

In this embodiment of the invention, the server authentication software provided by the distributor uses a seed value that is also dependent on the identity of the web-site. The seed value is hard-coded into the server authentication software according to one embodiment of the invention and the software is provided in executable form only to the server. When a server receives a challenge message it generates response one-time information using the seed-value associated with the authentication program it hosts, which has been provided by the authenticating body distributing the server authentication software. A response message which includes the response one-time information is then sent back to the client terminal 32.

In this embodiment, as before, if the response message one-time information matches the one-time information generated using the authentication device, then the web-site identity is confirmed. However, in this embodiment, each server authentication application associated with a different web-site generates different one-time information, and each client authentication device 34 will generate the same one-time information unique to each web-site the user has sought access to if the client authentication device 34 is operated by different users at the same time.

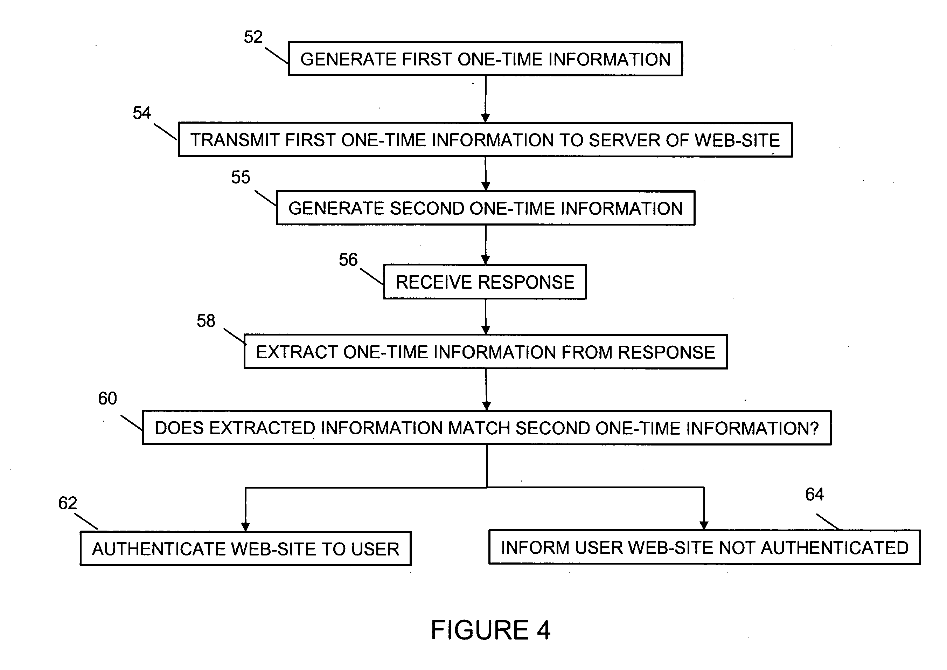

Figure 4 shows a different embodiment of the invention. According to this embodiment, the authentication device 34 is triggered twice during the authentication of a web-page. First one-time information is generated using a random seed by the authentication device 34 and this first one-time information is sent in the authentication challenge to the remote server. The remote server uses the one-time information sent as a seed value for generating the response one-time information. The authentication device 34 then generates second one-time information this time using the previous one-time information as a seed value. If the response one-time information matches the second one-time information, the web-site is authenticated.

In this embodiment of an authentication scheme according to the invention, each server for a web-site which has subscribed to the scheme is provided with the same server authentication application 58, but provides a unique response to the client terminal 32 and each client authentication device 34 generates a unique challenge, despite being provided with the same one-time password authentication application.

In a modification of this embodiment, the second one-time information is generated using the first one-time information in combination with an identifier for the web-site to be authenticated. In this case, the response one-time information is generated by the ser ver associated with the web-site also in dependence on the first one-time information and te web-site identifier. If the response and second one-time information match, then the web-site is authenticated.

In one embodiment of the invention, the server authentication application includes additional response information in the response message that it sends to the user, described in more detail herein below. For example, the response message includes a reverse authentication challenge back to the user. In this embodiment, after processing the response message to authenticate the web-site, a user associated one-time information is generated. This information can be generated using an authentication token in the manner known in the art or be provided by the authentication device according to the invention when it is seeded with a value which depends on a user identity.

When this user information is sent back to the server hosting the web-site and processed, the user's identity is authenticated to the server. In some embodiments of the invention in which the user identity, the authentication message exchange process also enables a key exchange which allows the user and the remote web-server to establish an encrypted communications challenge for future exchanges of information.

In some embodiments of the invention, the authentication device 34 is provided in a form which can communicate electronically with the client authentication program, and/or is an integral part of the client authentication program. For example, in one embodiment of the invention, the authentication device 34 instead comprises a software component of the client authentication program which is distributed to users.

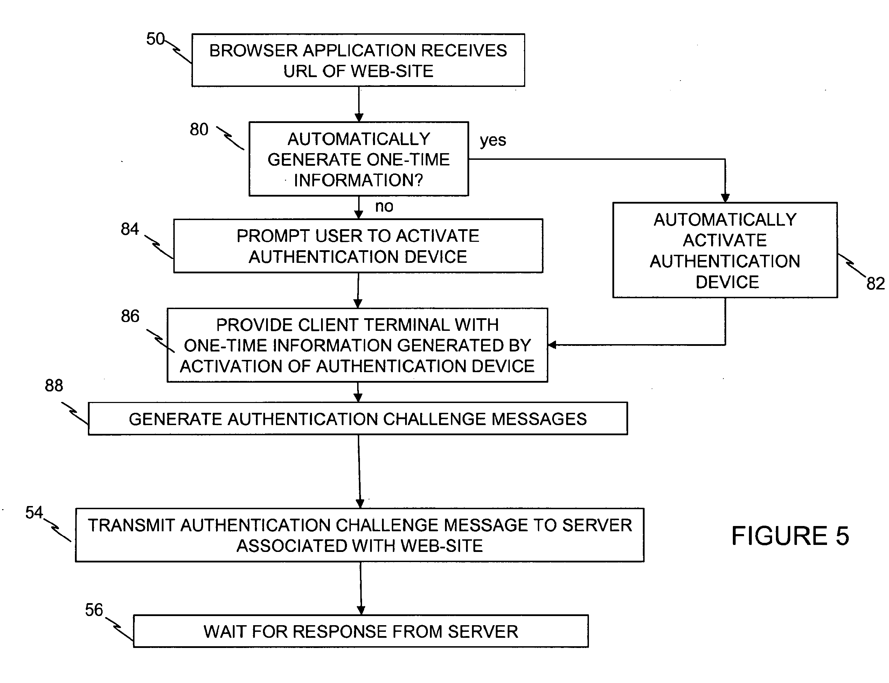

Figure 5 shows an embodiment where the client authentication program 33 running on the client terminal 32 is capable of communicating and controlling the operation of the authentication device 34. In this embodiment, when the browser application receives a web-site url (step 50), if the client authentication application 33 can be configured to optionally automatically trigger the generation of one-time information (step 80). If configured to automatically generate the information, for example, by automatically activating the authentication device via a wired or wireless communications link (step 82), the authentication device 34 (or software module of the client authentication information) automatically includes the one-time information to the client authentication application 22 (step 86) for inclusion in the challenge message sent to the web-site server (step 88). In some embodiments of the invention, the authentication application 34 is instead configured to enable the user to manually provide the client authentication application 33 with the one-time information generated and displayed on the device either by manually inputting it or by prompting the user to establish an electronic connection between the authentication device 34 and the client terminal 32 (step 84).

The one-time information comprises coded data such as a sequence of alphabetical characters and/or numbers and/or symbols. If the user is required to input the one-time information or compare it with the one-time information provided by the response message, then the one-time information generated by the authentication device and/or the response one-time information is either suitably displayed on the authentication device and/or client terminal or reproduced in an audio form.

The distribution of the client and server authentication software is controlled by an authenticating entity according to one embodiment of the invention. The authentication software may be provided as a sequence of one-time information generating algorithms and the sequence of algorithms is synchronised in each message exchange between an authentication device and the server of a web-site which is to be authenticated.

Thus in one embodiment the invention provides a method of enabling a user to verify a plurality of web-sites using a single one-time information generating algorithm is described. The software comprising the one-time password generating algorithm is provided in a secure form such as part of a sealed authentication device. When the user wishes to authenticate a web-site, they activate the authentication device to trigger the generation of one-time information. The server hosting the web-site is issued with a challenge by authentication appliation running on the user's terminal and responds with one-time information generated using software issued by an authenticating body which is sent to the client terminal. If the one-time information returned by the server matches the one-time information generated at the client terminal end, the web-site is authenticated and is displayed in a browser application running on the client terminal 32.

## Claims

**1.** A method of authenticating a plurality of websites (11,12,14) at a client terminal (32), the method comprising, each time access to any one of said plurality of websites (11, 12, 14) is sought using said client terminal (32):
generating on said client terminal (32) an authentication challenge message (28) comprising first one-time information using a one-time information generating algorithm;
communicating the authentication challenge message (28) to a server associated with the web-site (11,12, 14) to which access is sought;
processing said authentication challenge message (28) at the server and generating a response message (30) including one-time information;
communicating said response message (30) to said client terminal (32) and determining from said response message (30) response one-time information, and
comparing said first one-time information and said response one-time information to authenticate the web-site in the event of a match, whereby each of said plurality of web-sites is authenticated by sending a challenge to its respective server comprising one-time information generated using the same one-time information generating algorithm.

**2.** A method as claimed in claim 1, wherein said one-time information is generated using an algorithm which is seeded in dependence on an identifier for the web-site to which access is sought.

**3.** A method as claimed in claim 1 or 2, wherein the generation of said first one-time information is automatically generated when access to a web-site is sought by a user.

**4.** A method as claimed in claim 3, wherein, in the event of said first one-time information and said response one-time information matching, the identity of said web-site is automatically indicated at the client terminal as authenticated.

**5.** A method as claimed in claim 3 or 4, wherein access to said web-site is prevented if the response does not contain one-time information which matches the first one-time information.

**6.** A method as claimed in any one of claims 3 to 5, wherein access to said web-site is prevented if the response is not received within a predetermined period of time from the generation of said first one-time information.

**7.** A method of authenticating a plurality of websites (11,12,14) at a client terminal (32), the method comprising, each time access to any one of said plurality of websites (11, 12, 14) is sought using said client terminal (32):
generating on said client terminal (32) an authentication challenge message (28) comprising first one-time information;
communicating the authentication challenge message (28) to a server associated with the web-site (11,12, 14) to which access is sought, said authentication challenge message including said first one-time information;
processing said authentication challenge message (28) at the server to extract said first one-time information and generating a response message (30) including response one-time information generated in dependence on said first one-time information;
communicating said response message (30) to said client terminal (32) and determining from said response message (30) response one-time information,
comparing the response one-time information with second one-time information generated at the client terminal (32) to authenticate the web-site in the event of a match, whereby each of said plurality of web-sites is authenticated by sending a challenge to its respective server comprising one-time information generated using the same one-time information generating algorithm.

**9.** A method as claimed in claim 7, wherein the second one-time information is automatically generated after generating the first one-time information.

**10.** A method according to any previous claim, wherein the one-time information included in the challenge message is generated by triggeririg the execution of said one-time information generating algorithm on an authentication device (34).

**11.** A method as claimed in claim 10, wherein the authentication device (34) automatically communicates coded information to the client terminal using a short-range communications link.

**12.** A method as claimed in any one of claims 10 or 11, wherein the authentication device (34) includes a plurality of different one-time information generating algorithms which are executed in a predetermined sequence.

**13.** A method as claimed in claim 12, wherein the method further comprises:
challenging the user to provide user identity authentication information when said client terminal 32 receives said response message,
generating one-time information in dependence on the identity of the user; and
responding to said server with a message including said one-time information generated in dependence on the identity of the user and said web-site identity, whereby said user's identity is authenticated at each of said plurality of web-sites using said authentication device (34).

**14.** An authentication device (34) arranged to provide one-time information automatically to a client terminal (32) using a one-time information generating algorithm, said one-time information being generated for use in the method according to any one of claims 1 to 13.

**15.** A set of coded instructions provided as one or more computer program products, each computer program product being arrange to provide in executable code on one or more computer platforms for use in appropriate steps of the method according to anyone of claims 1 to 13.
